# EUROPEAN PATENT APPLICATION

(11) **EP 4 583 523 A1**
(43) Date of publication of application: **09.07.2025**
(21) Application number: 23880066.8
(22) Date of filing: 22.09.2023
(51) Int. Cl.: H04N 23/62, H04N 23/63, H04N 23/951

(54) **ELECTRONIC DEVICE, METHOD, AND NON-TRANSITORY COMPUTER-READABLE STORAGE MEDIUM FOR CHANGING SETTING OF CAMERA**

(30) Priority: 21.10.2022 KR 20220136908; 26.10.2022 KR 20220139648
(71) Applicant: Samsung Electronics Co., Ltd., Suwon-si, Gyeonggi-do 16677 (KR)
(72) Inventor: KIM, Donghyun, Suwon-si Gyeonggi-do 16677 (KR); KWON, Beomjoon, Suwon-si Gyeonggi-do 16677 (KR); YI, Kyungheum, Suwon-si Gyeonggi-do 16677 (KR); HONG, Yeonho, Suwon-si Gyeonggi-do 16677 (KR)
(74) Representative: Gulde & Partner
(86) International application number: PCT/KR2023/014577
(87) International publication number: WO 2024/085487

(57) **Abstract**

An electronic device is provided. The electronic device may comprise a camera. The electronic device may comprise a processor. The processor may be configured to display, in response to execution of a first software application for setting the camera, a user interface of the first software application comprising setting menus corresponding to the respective settings related to image capturing via the camera. The processor may be configured to identify a user input received for one setting menu among the setting menus. The processor may be configured to identify a value for the setting corresponding to the setting menu, on the basis of the user input. The processor may be configured to acquire an image by using the camera operated on the basis of the setting adjusted according to the value, on the basis of executing a second software application in a foreground state.

## Description

### [Technical Field]

The following descriptions relate to an electronic device, a method, and a non-transitory computer readable storage medium for changing setting of a camera.

### [Background Art]

An electronic device may include a camera to obtain an image including an external object. The electronic device may include a software application for taking a shot via the camera. According to the camera, a function of the camera and a setting range of the function may be limited. The electronic device may drive the camera according to a setting and a range of the setting according to the camera and may obtain an image by using a software application for taking a shot via the camera.

### [Disclosure]

### [Technical Solution]

An electronic device is provided. The electronic device may comprise a camera. The electronic device may comprise a processor. The processor may be configured to, in response to an execution of a first software application for setting of the camera, display a user interface of the first software application including setting menus respectively corresponding to settings related to a shot via the camera. The processor may be configured to identify a user input received with respect to a setting menu from among the setting menus. The processor may be configured to, based on the user input, identify a value for the setting corresponding to the setting menu. The processor may be configured to, based on executing a second software application in a foreground state, obtain an image by using the camera driven based on the setting adjusted according to the value.

A method performed by an electronic device is provided. The method may comprise, in response to an execution of a first software application for setting of a camera of the electronic device, displaying a user interface of the first software application including setting menus respectively corresponding to settings related to a shot via the camera. The method may comprise identifying a user input received with respect to a setting menu from among the setting menus. The method may comprise, based on the user input, identifying a value for the setting corresponding to the setting menu. The method may comprise, based on executing the second software application in a foreground state, obtaining an image by using the camera driven based on the setting adjusted according to the value.

### [Description of the Drawings]

FIG. 1 illustrates an example of a user interface including setting menus corresponding to setting of a camera by using a software application for setting of the camera.
FIG. 2 illustrates an exemplary electronic device including a camera and a software application for taking a shot via a camera.
FIG. 3 illustrates an exemplary electronic device including a software application for taking a shot via a camera and a software application for setting of the camera.
FIG. 4 is a flowchart illustrating an exemplary method of changing a function of a camera by using a software application for setting of the camera.
FIG. 5A is a flowchart illustrating an exemplary method of obtaining an image by using a software application for taking a shot via a camera.
FIG. 5B is a flowchart illustrating an exemplary method of obtaining an image based on a changed capability of a camera by using a software application for setting of the camera.
FIG. 6 is a block diagram of an electronic device in a network environment according to various embodiments.
FIG. 7 is a block diagram illustrating a camera module according to various embodiments.

### [Mode for Invention]

The terms used in the present disclosure are only used to describe a specific embodiment and may not be intended to limit the scope of other embodiments. A singular expression may encompass a plural expression unless the context clearly indicates otherwise. Terms used herein, including technical or scientific terms, may have the same meaning as commonly understood by a person having ordinary skill in the art described in the present disclosure. Among the terms used in the present disclosure, terms defined in a general dictionary may be interpreted in the same or similar meaning in the context of the relevant technology and are not interpreted in an ideal or overly formal sense unless explicitly defined in the present disclosure. In some cases, even terms defined in the present disclosure should not be construed to exclude embodiments of the present disclosure.

Various embodiments of the present disclosure described hereinafter describe a hardware-based approach as an example. However, as the various embodiments of the present disclosure include a technology that utilizes both hardware and software, the embodiments of the present disclosure should not be construed as excluding a software-based approach.

Terms referring to the configuration of an device in the following description (e.g., processor, camera, display, module, communication circuit, and the like), terms for an operational state (e.g., step, operation, and procedure), terms referring to a signal (e.g., signal, information, data, stream, user input, input, and the like), terms referring to data (e.g., parameter, value, and the like) are illustrated for convenience of explanation. Therefore, the present disclosure is not limited to the terms described below, and another term having the same technical meaning may be used.

In addition, in the present disclosure, expressions such as 'greater than' or 'less than' may be used to determine whether a specific condition is satisfied or fulfilled, but this is only a description to express an example and does not exclude 'greater than or equal to' or 'less than or equal to'. A condition described as 'greater than or equal to' may be replaced by 'greater than', a condition described as 'less than or equal to' may be replaced by 'less than', and a condition described as 'greater than or equal to and less than' may be replaced by 'greater than and less than or equal to'. In addition, hereinafter, 'A' to 'B' refers to at least one of elements from A (including A) to B (including B).

Hereinafter, in the present disclosure, a software application for setting of a camera may be referred to as a software application for changing a function of the camera, or as a first software application. In addition, in the present disclosure, a software application for taking a shot via the camera may be referred to as a software application for using the camera, or as a second software application.

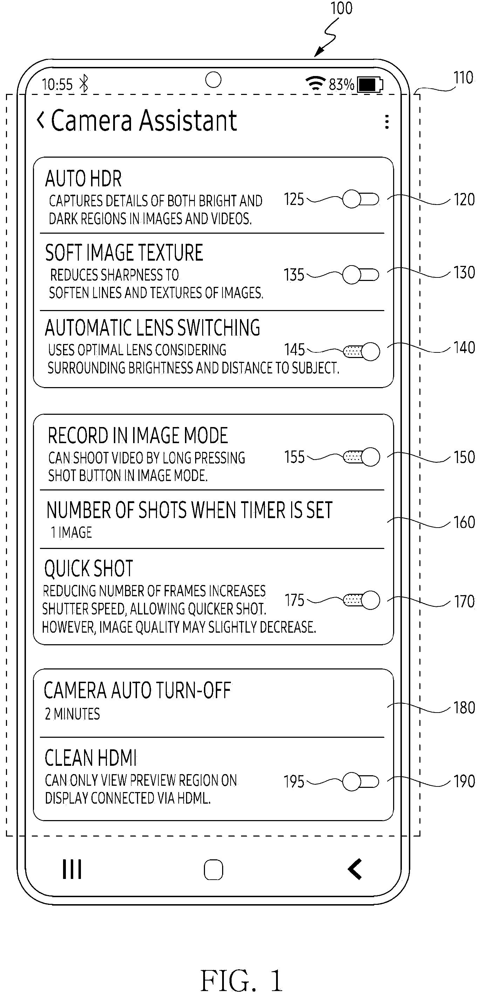

FIG. 1 illustrates an example of a user interface including setting menus corresponding to setting of a camera by using a software application for setting of the camera.

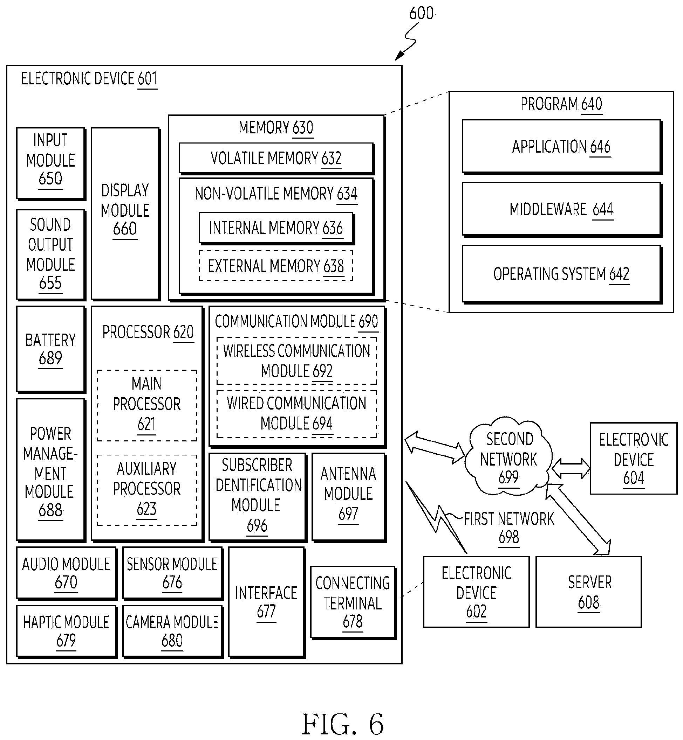

For example, an electronic device 100 of FIG. 1 may be understood as the same device as an electronic device 601 of FIG. 6. The electronic device 100 of FIG. 1 may include a processor (not shown). For example, the processor of the electronic device 100 of FIG. 1 may include at least a portion of a processor 620 of the electronic device 601 of FIG. 6. For example, the processor of the electronic device 100 of FIG. 1 may execute a first software application and a second software application. For example, an operation of the electronic device 100 using the first software application and the second software application may be controlled by the processor.

Referring to FIG. 1, the electronic device 100 may display a user interface 110 on a screen. For example, the user interface 110 may represent a user interface of the first software application for setting of the camera. For example, the setting of the camera may represent a setting of the camera included in the electronic device 100. For example, the setting may represent a setting related to a shot via the camera. For example, the setting of the camera may represent a setting for a function of the camera that determines a capability of the camera.

For example, in order to change the setting of the camera, the user interface 110 of the first software application may display the setting menus corresponding to the settings related to the shot via the camera. For example, the user interface 110 may display a first setting menu 120, a second setting menu 130, a third setting menu 140, a fourth setting menu 150, a fifth setting menu 160, a sixth setting menu 170, a seventh setting menu 180, and an eighth setting menu 190.

For example, the user interface 110 may include items for adjusting a value of the setting for a portion of the setting menus. For example, the user interface 110 may include an item 125 for adjusting the value for the setting of the first setting menu 120. For example, the user interface 110 may include an item 135 for adjusting the value for the setting of the second setting menu 130. For example, the user interface 110 may include an item 145 for adjusting the value for the setting of the third setting menu 140. For example, the user interface 110 may include an item 155 for adjusting the value for the setting of the fourth setting menu 150. For example, the user interface 110 may include an item 175 for adjusting the value for the setting of the sixth setting menu 170. For example, the user interface 110 may include an item 195 for adjusting the value for the setting of the eighth setting menu 190.

For example, the user interface 110 may not include an item for adjusting the value of the setting for another portion of setting menus. For example, the other portion of the setting menus may represent setting menus in which a value for setting includes three or more cases, rather than the value for the setting includes two cases such as on/off. For example, in case that the user interface 110 does not include an item for adjusting the value for setting of the fifth setting menu 160, and a user inputs a user input for the fifth setting menu 160, the values for the setting of the fifth setting menu 160 may be displayed by floating via the user interface 110. For example, in case that the user interface 110 does not include an item for adjusting the value for setting of the seventh setting menu 180, and the user inputs the user input for the seventh setting menu 180, the values for setting the seventh setting menu 180 may be displayed by floating via the user interface 110.

For example, the user interface 110 may display content for each setting menu. For example, the user interface 110 may display a description of a function together with a function name representing the function of each setting menu. For example, the user interface 110 may display the description of the function "Capture the details of both bright and dark regions in images and videos" together with "Automatic HDR" which is the function name of the first setting menu 120.

For example, the first setting menu 120 may be a setting menu corresponding to an automatic high dynamic range (HDR) function of the camera. For example, the automatic HDR function may represent that the electronic device 100 automatically performs the HDR function of obtaining a composite image by synthesizing a plurality of images exposed to light at different levels in a shot via the camera, based on a state of a surrounding environment of the electronic device 100. For example, the state of the surrounding environment of the electronic device 100 may include the surrounding illuminance of the electronic device 100. For example, based on being set to enable the first setting menu 120 according to the user input for the item 125, the electronic device 100 may enable the automatic HDR function and obtain an image via the camera in case that the surrounding illuminance is greater than or equal to a preset value. For example, based on being set to disable the first setting menu 120 according to the user input for the item 125, the electronic device 100 may disable the automatic HDR function, and the HDR function may be enabled according to the user input regardless of the surrounding illuminance. The electronic device 100 may obtain an image via the camera in which the HDR function is enabled or disabled according to the user input. For example, a plurality of candidate values allocated with respect to the first setting menu 120 may include a setting value corresponding to enablement and a setting value corresponding to disablement.

For example, the second setting menu 130 may be a setting menu corresponding to a soft image texture function. For example, the soft image texture function may represent a function that adjusts a degree displaying a periphery of a visual object in the image obtained via the camera. Herein, the image obtained via the camera may represent an image obtained based on the user input for a shot item displayed in the user interface of the second software application for a shot via the camera. For example, the electronic device 100 may obtain an image including a visual object displayed relatively sharply based on the second setting menu 130 being set to a basic mode according to the user input for the item 135. For example, the basic mode may represent that the second setting menu 130 is enabled. For example, the electronic device 100 may obtain an image including a visual object displayed as relatively blurry based on the second setting menu 130 being set to a soft mode according to the user input for the item 135. For example, the soft mode may represent that the second setting menu 130 is disabled. For example, a plurality of candidate values allocated with respect to the second setting menu 130 may include a setting value corresponding to the basic mode and a setting value corresponding to the soft mode.

For example, the third setting menu 140 may be a setting menu for automatically changing the lens of the camera. For example, the function of automatically changing the lens of the camera may represent a function of changing the lens of the camera regardless of the user input, based on a state of an environment related to a shot via the camera. Herein, the state of the environment related to the shot via the camera may include a distance between the electronic device 100 (or camera) and a subject, and illuminance around the electronic device 100. For example, based on the third setting menu 140 being enabled according to the user input for the item 145, the electronic device 100 may change the lens of the camera to one optimized for the state of the environment, regardless of the user input, based on the state of the environment related to the shot via the camera. For example, based on the third setting menu 140 being disabled according to the user input for the item 145, the electronic device 100 may change the lens of the camera based on the user input, regardless of the state of the environment. For example, a plurality of candidate values allocated with respect to the third setting menu 140 may include a setting value corresponding to enablement and a setting value corresponding to disablement.

For example, the fourth setting menu 150 may be a setting menu for changing a shot mode of the camera according to a time when a user input is inputted. For example, a function of changing the shot mode of the camera may represent a function of changing the shot mode of the camera according to a time when the user input for the shot item displayed in the user interface of the second software application is inputted. Herein, the shot mode of the camera may include an image mode for obtaining an image via the camera and a record mode for obtaining a video via the camera. For example, based on the fourth setting menu 150 being enabled according to the user input for the item 155, the electronic device 100 may change the shot mode via the camera from the image mode to the record mode in case that the time when the user input for the shot item is inputted is greater than or equal to a certain value. For example, based on the fourth setting menu 150 being disabled according to the user input for the item 155, the electronic device 100 may not change the shot mode via the even when the time when the user input for the shot item is inputted is greater than or equal to a certain value. For example, a plurality of candidate values allocated with respect to the fourth setting menu 150 may include a setting value corresponding to enablement and a setting value corresponding to disablement.

For example, the fifth setting menu 160 may be a setting menu for identifying the number of images to be shot when a timer is set. For example, in the shot via the camera by using the second software application, the electronic device 100 may perform a timer setting that may shot after a certain period of time. At this time, the electronic device 100 may identify the number of consecutive images obtained via the shot performed after a certain period of time, according to the timer setting, via the setting value of the fifth setting menu 160. For example, the electronic device 100 may display the candidate values with respect to the setting menu floated by the user input for the fifth setting menu 160, via the user interface 110. Thereafter, the electronic device 100 may receive the user input for selecting a candidate value from among the candidate values. For example, the electronic device 100 may change a setting value of the fifth setting menu 160 based on the identified candidate value. For example, based on the setting menu of the fifth setting menu 160 being set to a first value, the electronic device 100 may obtain 1 image when shooting with the timer. For example, based on the setting menu of the fifth setting menu 160 being set to a second value, the electronic device 100 may obtain 3 images when shooting with the timer. For example, based on the setting menu of the fifth setting menu 160 being set to a third value, the electronic device 100 may obtain 5 images when shooting with the timer. For example, based on the setting menu of the fifth setting menu 160 being set to a fourth value, the electronic device 100 may obtain 7 images when shooting with the timer. For example, a plurality of candidate values allocated with respect to the fifth setting menu 160 may include a value corresponding to 1 image, a value corresponding to 3 images, a value corresponding to 5 images, and a value corresponding to 7 images. However, the present disclosure is not limited thereto. The electronic device 100 of the present disclosure may obtain a different number of images than the above example according to a value of the setting menu.

For example, the sixth setting menu 170 may be a setting menu for setting a quick shot function. For example, the quick shot function may represent a function capable of quickly shooting by changing the number of images for a composite image obtained via the camera. For example, the composite image may represent a final image obtained via the second software application. For example, the number of images for the composite image may represent a number within a range identified in accordance with a state of a surrounding environment of the electronic device 100 at a time when a user input for the shot item displayed in the user interface of the second software application is inputted. For example, the state of the surrounding environment of the electronic device 100 may include illuminance. For example, the range identified in accordance with the state of the surrounding environment of the electronic device 100 may be predefined according to illuminance. For example, based on the sixth setting menu 170 being enabled according to the user input for the item 175, the electronic device 100 may identify a range for the number of images based on the state of the surrounding environment according to the user input for the shot item, and the electronic device 100 may set the number of images as a minimum value within the identified range. Identifying the number of the images may represent determining the composite number of images to be used to obtain a final composite image with respect to the state of the surrounding environment (or shot environment). For example, based on the sixth setting menu 170 being disabled according to the user input for the item 175, the electronic device 100 may identify a range for the number of images based on the state of the surrounding environment according to the user input for the shot item, and the electronic device 100 may set the number of images to an optimal number for obtaining an composite image within the identified range. For example, the optimal number may be identified according to the state of the surrounding environment of the electronic device 100. For example, a plurality of candidate values allocated with respect to the sixth setting menu 170 may include a setting value corresponding to enablement and a setting value corresponding to disablement.

For example, the seventh setting menu 180 may be a setting menu for terminating camera shot according to whether to input by a user. For example, in the shot via the camera using the second software application, the electronic device 100 may identify the user input for the user interface of the second software application. For example, in case that the user input is not received via the user interface of the second software application for a certain period of time or longer, the electronic device 100 may terminate the camera shot using the second software application. For example, the electronic device 100 may identify the certain period of time via a setting value of the seventh setting menu 180. For example, the electronic device 100 may display candidate values with respect to the setting menu floated by the user input for the seventh setting menu 180, via the user interface 110. Thereafter, the electronic device 100 may receive the user input for selecting a candidate value from among the candidate values. For example, the electronic device 100 may change a setting value of the seventh setting menu 180 based on the identified candidate value. For example, based on the setting menu of the seventh setting menu 180 being set to the first value, the electronic device 100 may terminate the camera shot in case that the user input for the user interface of the second software application is not identified for 1 minute or more. For example, based on the setting menu of the seventh setting menu 180 being set to the second value, the electronic device 100 may terminate the camera shot in case that the user input for the user interface of the second software application is not identified for 2 minutes or more. For example, based on the setting menu of the seventh setting menu 180 being set to the third value, the electronic device 100 may terminate the camera shot in case that the user input for the user interface of the second software application is not identified for 5 minutes or more. For example, based on the setting menu of the seventh setting menu 180 being set to the fourth value, the electronic device 100 may terminate the camera shot in case that the user input for the user interface of the second software application is not identified for 10 minutes or more. For example, a plurality of candidate values allocated with respect to the seventh setting menu 180 may include a value corresponding to 1 minute, a value corresponding to 2 minutes, a value corresponding to 5 minutes, and a value corresponding to 10 minutes. However, the present disclosure is not limited thereto. The electronic device 100 of the present disclosure may terminate the camera shot after waiting for identification of the user input for a time different from that of the above example, according to the value of the setting menu.

For example, the eighth setting menu 190 may be a setting menu for setting a clean high-definition multimedia interface (HDMI). For example, the clean HDMI may represent a function of displaying only a preview of an image obtained via the shot via the camera in the electronic device 100 via a display of an external electronic device connected to the electronic device 100. Herein, the function of displaying a portion displayed in the electronic device 100 via the display of the external electronic device may be referred to as mirroring. For example, the electronic device 100 may be connected to the external electronic device via the HDMI. For example, the obtained image may represent the composite image (i.e., a final image) obtained using the second software application. For example, the preview may represent a composite image displayed in advance from among the user interface of the second software application. For example, based on the eighth setting menu 190 being enabled according to the user input for the item 195, the electronic device 100 may transmit only information for displaying the preview in the user interface of the second software application to the external electronic device. Accordingly, the external electronic device may display only the preview via the display. For example, based on the eighth setting menu 190 being disabled according to the user input for the item 195, the electronic device 100 may transmit information for displaying the user interface of the second software application to the external electronic device. The information for displaying the user interface may include the information for displaying the preview. Accordingly, the external electronic device may display the entire user interface of the second software application via the display. For example, a plurality of candidate values allocated with respect to the eighth setting menu 190 may include a setting value corresponding to enablement and a setting value corresponding to disablement.

Referring to FIG. 1, the electronic device 100 may display the user interface 110 for the first software application via the screen. The user interface 110 may include setting menus for the setting of the camera. For example, the setting menus displayed in the user interface 110 may include a setting of the camera not displayed via the user interface of the second software application. For example, the setting menus displayed in the user interface 110 may include a setting of the camera within a range that may not be set via the user interface of the second software application. In other words, according to a hardware constraint and/or a software constraint of the camera or a camera module of the electronic device 100, setting values of the second software application for taking a shot via the camera may be limited. Accordingly, via the setting menu of the first software application illustrated in FIG. 1, the electronic device 100 according to embodiments of the present disclosure may change the setting of the camera and control various operations of the camera.

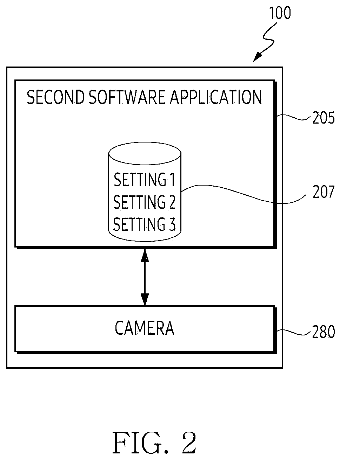

FIG. 2 illustrates an exemplary electronic device including a camera and a software application for taking a shot via a camera.

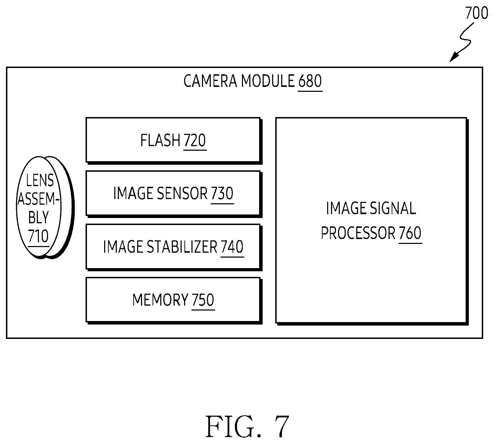

Referring to FIG. 2, an electronic device 100 may include a camera 280. For example, the camera 280 of FIG. 2 may be included in a camera module 680 of FIG. 6. For example, the camera 280 of FIG. 2 may be included in a camera module 680 of FIG. 7 and may include components of the camera module 680 of FIG. 7. For example, the electronic device 100 may include a second software application 205 for taking a shot via the camera 280. For example, the electronic device 100 may execute the second software application 205 to obtain an image via the camera 280. For example, the electronic device 100 may obtain the image based on a user input for a shot item of a user interface of the second software application 205. For example, information on a setting 207 related to the shot via the camera 280 of the second software application 205 may be included. For example, the information on the setting 207 related to the shot may include a setting related to a function of the camera 280 and a range of values with respect to the setting. Herein, the function of the camera 280 may also be referred to as a capability of the camera. For example, the function of the camera 280 may include a camera international standard organization (ISO) representing light sensitivity related to a film or sensor of the camera 280. For example, the function of the camera 280 may include a function of changing a brightness setting when shooting.

For example, in order for the electronic device 100 to perform a shot utilizing a specific function of the camera 280, a change in the setting 207 may be required. However, according to a hardware constraint and/or a software constraint of the camera 280, the electronic device 100 may be limited from changing the setting 207 and a range for the setting 207. In order to control the setting 207 from outside the second software application 205, a protocol accessible to the setting 207 is required, but it may be difficult to control the setting 207 since a separate protocol is not defined. Accordingly, the electronic device 100 may change the setting 207 only by updating the second software application 205 for the shot of the camera 280, and may change the function of the camera 280 based on the changed setting 207.

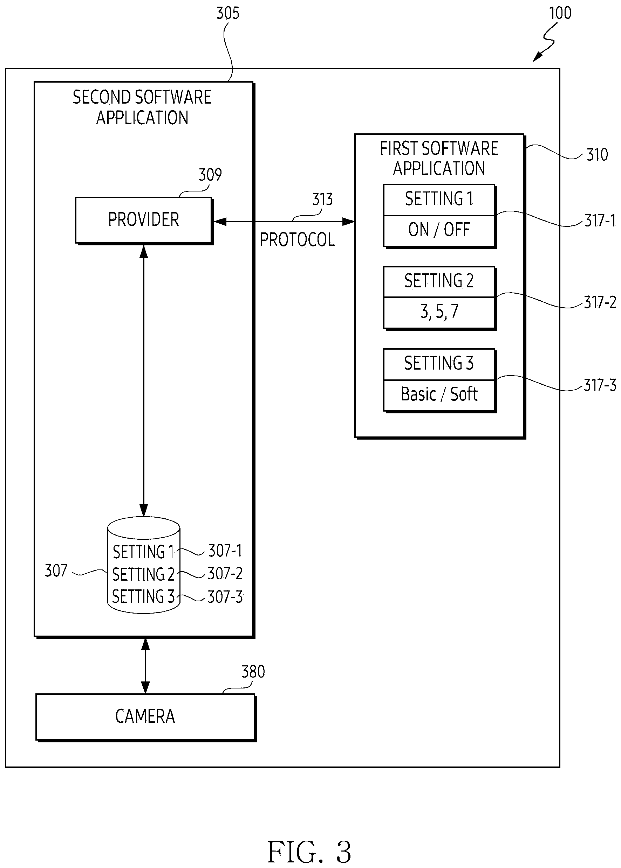

As described in FIG. 1, the electronic device 100 of the present disclosure may include a first software application for changing the setting of the camera by being used together with the second software application for taking a shot via the camera. The electronic device 100 may change the setting of the camera via the first software application, and obtain an image by using the camera according to the changed setting via the second software application. An example of the electronic device 100 in this regard will be described in FIG. 3 below.

FIG. 3 illustrates an exemplary electronic device including a software application for taking a shot via a camera and a software application for setting of the camera.

For example, an electronic device 100 of FIG. 3 may be understood as the same device as an electronic device 601 of FIG. 6. The electronic device 100 of FIG. 3 may include a processor (not shown). For example, the processor of the electronic device 100 of FIG. 3 may include at least a portion of a processor 620 of the electronic device 601 of FIG. 6. For example, the processor of the electronic device 100 of FIG. 3 may be operably coupled to a camera 380 of the electronic device 100. Herein, the processor and the camera 380 being operably coupled may represent that the camera 380 may be controlled by the processor. For example, the processor of the electronic device 100 of FIG. 3 may execute a first software application 310 and a second software application 305. For example, an operation of the electronic device 100 using the first software application 310 and the second software application 305 may be controlled by the processor.

Referring to FIG. 3, the electronic device 100 may include the second software application 305 for taking a shot via the camera 380 and the first software application 310 for changing a setting 307 of the camera 380. For example, the electronic device 100 may include the camera 380. For example, the electronic device 100 may obtain an image via the camera 380 by using the second software application 305. For example, the camera 380 of FIG. 3 may include at least a portion of a camera module 680 of FIG. 6. For example, the camera 380 of FIG. 3 may include at least a portion of a camera module 680 of FIG. 7, and may include at least a portion of components of the camera module 680 of FIG. 7.

For example, the electronic device 100 may execute the second software application 305 to obtain an image via the camera. For example, the electronic device 100 may obtain the image based on a user input with respect to a shot item of a user interface of the second software application 305. For example, the second software application 305 may at least temporarily store the setting 307 related to the shot via the camera 380. The electronic device 100 may shoot via the camera 380 according to the setting 307 by using the second software application 305. For example, the setting 307 may include a first setting 307-1, a second setting 307-2, and a third setting 307-3. However, the present disclosure is not limited thereto, and FIG. 3 is merely exemplary. Accordingly, the second software application 305 may shoot via the camera 380 based on four or more settings. For example, information on the setting 307 related to the shot may include a setting related to a function of the camera 380 and a range of values with respect to the setting. Herein, the function of the camera 380 may also be referred to as a capability of the camera. For example, the function of the camera 380 may include a camera international standard organization (ISO) representing light sensitivity related to a film or sensor of the camera 380. For example, the function of the camera 380 may include a function of changing the brightness setting when shooting.

For example, the electronic device 100 may change the setting 307 to perform the shot utilizing the function of the camera 380. For example, the electronic device 100 may change the setting 307 via the first software application 310. For example, the electronic device 100 may provide information on the setting 307 from the second software application 305 to the first software application 310. For example, the electronic device 100 may transmit information on the setting 307 to the first software application 310 via a provider 309 of the second software application 305. For example, the provider 309 may include instructions for providing information on the setting 307 to the first software application 310. Hereinafter, the provider 309 may also be referred to as an instruction. For example, the provider 309 may be configured based on a protocol 313 defining communication between the second software application 305 and the first software application 310. That is, information on the setting 307 may be provided to the first software application 310 via the provider 309, which is an instruction according to the protocol 313 that stipulates transmission between the second software application 305 and the first software application 310.

For example, the electronic device 100 may display setting menus 317-1, 317-2, and 317-3 corresponding to the setting 307 via a screen, by using a user interface of the first software application 310. For example, the electronic device 100 may display the first setting menu 317-1, the second setting menu 317-2, and the third setting menu 317-3 via the user interface of the first software application 310. For example, the setting menus 317-1, 317-2, and 317-3 may correspond to the settings 307-1, 307-2, and 307-3 related to the shot via the camera 380, respectively. For example, the first setting menu 317-1 may correspond to the first setting 307-1. The second setting menu 317-2 may correspond to the second setting 307-2. The third setting menu 317-3 may correspond to the third setting 307-3. For example, each of the setting menus 317-1, 317-2, and 317-3 may include a plurality of candidate values allocated based on the function of the camera 380 related to the corresponding setting. For example, the first setting menu 317-1 may include a value representing that the setting of the camera 380 is ON, and a value representing that the setting of the camera 380 is OFF, as a candidate value. For example, the second setting menu 317-2 may include values 3, 5, and 7, which are values for setting of the camera 380, as candidate values. For example, the third setting menu 317-3 may include a basic mode and a soft mode, which are values for the setting of the camera 380, as candidate values. For example, the candidate value may be provided from the second software application 305 to the first software application 310. For example, by providing a range corresponding to the candidate value, the candidate value may be provided from the second software application 305 to the first software application 310. For example, it is assumed that a value of specific data corresponds to the candidate value called ON, in case of having a value of 0 to 127, and the value of the specific data corresponds to the candidate value called OFF, in case of having a value of 128 to 255. At this time, the electronic device 100 may provide the first software application 310 with a range of 0 to 127 for enabling a specific setting and a range of 128 to 255 for disabling the specific setting from the second software application 305. That is, the electronic device 100 may provide information on the candidate value from the second software application 305 to the first software application 310.

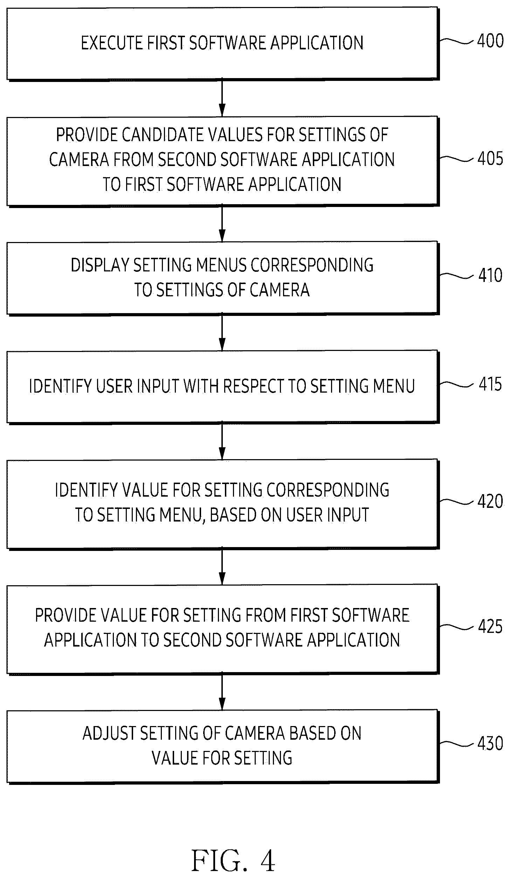

For example, each of the first setting menu 317-1 to the third setting menu 317-3 of FIG. 3 may be one of the first setting menu 120 to the eighth setting menu 190 of FIG. 1. In other words, the electronic device 100 may display the setting menu via the user interface of the first software application 310 and identify a value for changing the setting according to the user input with respect to the displayed setting menu. The electronic device 100 may change the setting 307 with respect to the camera 380 by providing the identified value according to the user input to the second software application 305. Details related to this will be described in FIG. 4 below. The electronic device 100 may obtain an image via the changed camera 380 by using the second software application 305.

Referring to FIGS. 1 to 3, by changing the setting of the camera via a software application (e.g., the first software application) for changing the setting of the camera, the previously used setting of the camera may be maintained even when the electronic device 100 is changed or a user of the electronic device 100 is changed. In addition, by changing the setting of the camera via a separate software application, the previous setting of the camera may be maintained even when it is only an update for taking a shot via the camera. In addition, by changing the setting of the camera via a separate software application (e.g., the first software application), information for modification and supplementation may be provided in the process of updating the application for taking a shot via the camera. In addition, individual customization may be performed according to the user using the electronic device 100 by changing the setting of the camera via a separate software application (e.g., the first software application). For example, a user who uses the camera at a professional level may shoot via a camera with a changed setting via a separate software application (e.g., the first software application). On the other hand, a typical user may use only a software application (e.g., the second software application) for taking a shot via the camera without changing the setting or changing the setting at a simple level via a separate software application (e.g., the first software application). In addition, by changing the setting of the camera via a separate software application (e.g., the first software application), optimizing the setting values that may vary as the model of the camera or configuration (e.g., lens) included in the camera changes is possible. Therefore, the electronic device 100 may provide the user with an optimized setting value for each electronic device by using a software application (e.g., the first software application) for setting of the camera.

FIG. 4 is a flowchart illustrating an exemplary method of changing a function of a camera by using a software application for setting of the camera.

Operations disclosed in the flowchart of FIG. 4 may be performed by the electronic device 100 of FIG. 3. For example, the processor of the electronic device 100 of FIG. 3 may execute at least a portion of the operations in the flowchart of FIG. 4.

Referring to FIG. 4, in operation 400, a processor may execute a first software application. The first software application may be a software application for changing the setting of the camera of the electronic device 100. For example, the processor may execute the first software application in response to a user input of the electronic device 100. For example, when the processor executes the first software application, the processor may execute a second software application in a background. However, the present disclosure is not limited thereto. For example, before executing the first software application, the processor may execute the second software application in response to the user input. After the second software application is executed, the processor may execute the first software application in response to the user input.

In operation 405, the processor may provide candidate values for the settings of the camera from the second software application to the first software application. For example, the processor may provide candidate values for the settings of the camera from the second software application to the first software application via a protocol (e.g., the protocol 313 of FIG. 3). For example, the processor may provide candidate values for settings related to a shot via the camera in response to execution of the second software application. For example, the candidate values may be allocated based on a function of the camera related to the setting of the camera. For example, the processor may provide information on the candidate values from the second software application to the first software application.

In operation 410, the processor may display setting menus corresponding to the settings of the camera. For example, the processor may display the setting menus via a user interface of the first software application. For example, the setting menus may correspond to the settings related to the shot via the camera, respectively. For example, when displaying the setting menu via the first software application, the processor may display a function name of the setting corresponding to the setting menu and a description of the function. For example, when displaying the setting menu via the first software application, the processor may display an item for the setting menu. For example, the item for the setting menu may represent a visual object for adjusting a value for setting the setting menu.

In operation 415, the processor may identify the user input for the setting menu. For example, the user of the electronic device 100 may provide an input with respect to a screen of a region corresponding to the setting menu displayed on the user interface of the first software application. For example, the input for the screen may be inputted by a body part (e.g., a finger) of the user or another device (e.g., a pen). For example, the processor may identify the user input based on a sensor of the electronic device 100. For example, the processor may identify the user input for a setting menu from among a plurality of setting menus.

In operation 420, the processor may identify a value for the setting corresponding to the setting menu based on the user input. Herein, the value for the setting may represent a candidate value from among the candidate values for the settings related to the shot via the camera. For example, it may be assumed that the candidate values include a setting value corresponding to enablement and a setting value corresponding to disablement. The processor may identify the user input of the electronic device 100 for the setting value corresponding to enablement from among the candidate values. For example, the processor may identify the setting value corresponding to the enablement as a value for the setting corresponding to the setting menu. For example, the processor may store a value identified with respect to a specific setting menu in the first software application. Referring to the above, it is described that a value for the setting is identified with respect to one setting menu, but the present disclosure is not limited thereto. That is, the processor may identify a value for setting for each setting menu with respect to the plurality of the setting menus.

In operation 425, the processor may provide a value for the setting from the first software application to the second software application. For example, the processor may provide the value for the setting from the first software application to the second software application via the protocol (e.g., the protocol 313 of FIG. 3). For example, the processor may transmit information on the value for the setting corresponding to the setting menu from the first software application to the second software application. For example, the value for the setting may represent a value identified by the processor with respect to the setting menu in the operation 420.

In operation 430, the processor may adjust the setting of the camera, based on the value for the setting. For example, the processor may change or adjust the setting stored by the second software application, based on the value for the setting.

Although not illustrated in FIG. 4, the processor may adjust the setting based on the value for the setting, and the adjusted setting value may be stored at least temporarily in the second software application. In addition, although not illustrated in FIG. 4, the processor may obtain an image via the camera by using the second software application based on the adjusted setting value. For example, based on the second software application executed in a foreground state, the processor may obtain an image by using a camera driven based on the adjusted setting.

Referring again to FIG. 1 in relation to the flowchart of FIG. 4, the electronic device 100 may display the first setting menu 120 via the user interface 110 of the first software application. For example, the electronic device 100 may display a function name, a description of the function, and the item 125 of the setting corresponding to the first setting menu 120 together. For example, the electronic device 100 may not display an item for adjusting a value of a setting with respect to some setting menus (e.g., the fifth setting menu 160) via the first software application. For example, the portion of the setting menus may include three or more candidate values, and accordingly, the three or more candidate values may be floated in response to an input of a user for the portion of the setting menus. Based on the user input for a candidate value from among the three or more candidate values, a value of the setting for some of the setting menus may be identified. For example, the electronic device 100 may provide the identified value for the setting menu to the second software application, and may adjust the setting of the camera based on the identified value. For example, the electronic device 100 may store the adjusted setting of the camera in the second software application. For example, the electronic device 100 may at least temporarily store the adjusted setting of the camera in the second software application. For example, the electronic device 100 may obtain an image via the camera by using the second software application, based on the adjusted setting of the camera.

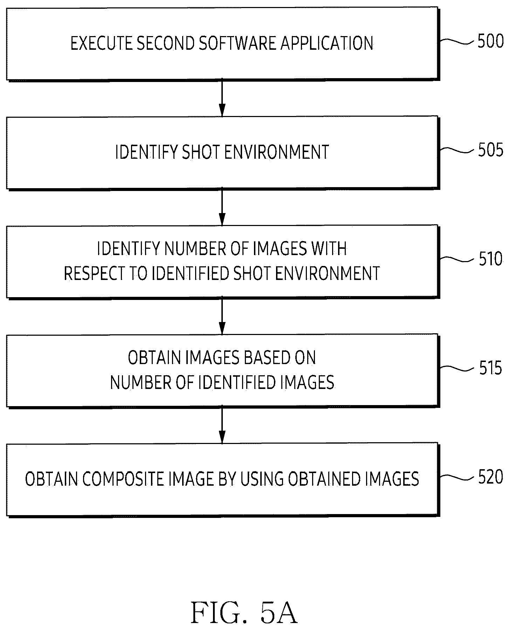

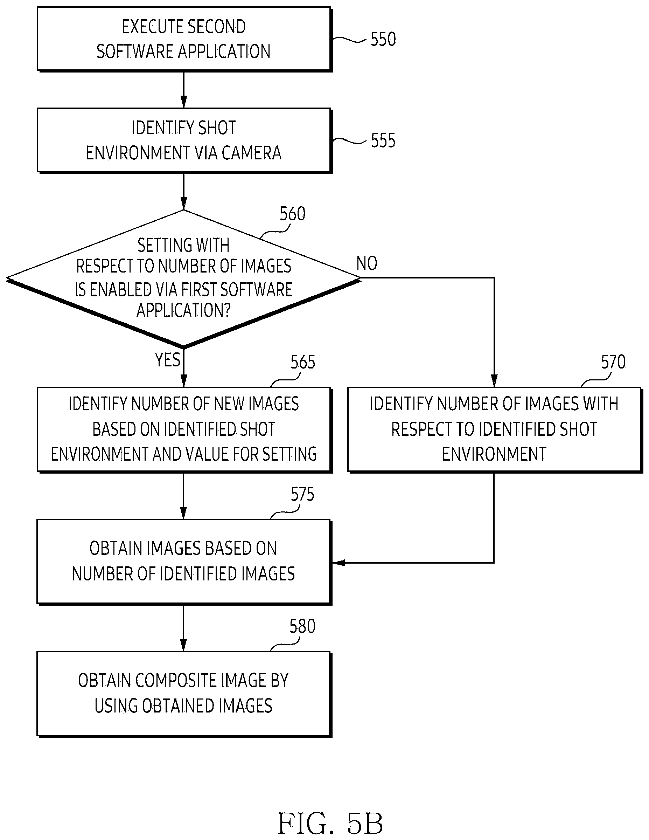

For example, the electronic device 100 may obtain an image by using the camera driven according to the adjusted setting. According to the adjustment of the setting, the electronic device 100 may perform the operation of obtaining an image via the camera differently. In case that the setting for the quick shot function is adjusted, an example of the operation of the electronic device 100 obtaining an image via the camera driven based on the adjusted setting will be described in FIGS. 5A and 5B below.

FIG. 5A is a flowchart illustrating an exemplary method of obtaining an image by using a software application for taking a shot via a camera.

Referring to FIG. 5A, in operation 500, a processor may execute a second software application. For example, the second software application may be executed in a foreground state. For example, the processor may execute the second software application in response to a user input of an electronic device.

In operation 505, the processor may identify a shot environment. For example, the shot environment may represent an environment related to the shot via the camera. For example, the processor may identify the shot environment around the electronic device via a sensor of the electronic device. For example, the shot environment may include illuminance around the electronic device.

In operation 510, the processor may identify a number of images with respect to the identified shot environment. Identifying the number of the images may represent determining a composite number of images to be used to obtain a final composite image with respect to a state of the surrounding environment (or the shot environment). For example, the number of the images may represent the number of images synthesized to obtain a composite image via the camera. For example, according to the identified shot environment, the number of images may be identified within a range. For example, in case that the identified shot environment is in a state of low illuminance, the number of images may be identified within a range of 20 to 30. On the other hand, in case that the identified shot environment is in a state of high-illuminance, the number of images may be identified within a range of 5 to 10. At this time, the range for the number of images according to illuminance may be set in advance. Even when the processor uses the second software application, it may not be possible to adjust the range for the number of images.

In operation 515, the processor may obtain images based on the number of identified images. For example, the processor may obtain images with the number of images identified via the camera in response to the user input for a shot item displayed in a user interface of the second software application. For example, the processor may obtain the number of images corresponding to the identified value in response to the user input for the shot item. In the state of low-illuminance, the processor may identify a value from among the range of 20 to 30 and obtain the number of images corresponding to the identified value.

In operation 520, the processor may obtain the composite image by using the obtained images. For example, the processor may obtain the composite image by synthesizing the obtained images. Herein, the composite image may represent a final image obtained via the camera in response to the user input.

As described above, the electronic device may obtain images for synthesizing according to the number of images identified within a preset range, in accordance with the state of the shot environment. The user of the electronic device may want to shoot quickly regardless of the state of the shot environment. However, in case of using only the second software application, the electronic device may not be able to change the setting as described above.

FIG. 5B is a flowchart illustrating an exemplary method of obtaining an image based on a changed capability of a camera by using a software application for setting of the camera.

Operations disclosed in the flowchart of FIG. 5B may be performed by the electronic device 100 of FIG. 3. For example, the processor of the electronic device 100 of FIG. 3 may execute at least some of the operations of the flowchart of FIG. 5B.

Referring to FIG. 5B, in operation 550, a processor may execute a second software application. For example, the second software application may be executed in a foreground state. For example, the processor may execute the second software application in response to a user input of an electronic device 100.

In operation 555, the processor may identify an environment related to a shot via the camera. For example, the processor may identify a shot environment around the electronic device 100 via a sensor (e.g., a sensor module 676 of FIG. 6) of the electronic device 100. For example, the shot environment may include illuminance around the electronic device 100.

In operation 560, the processor may identify whether a setting for a number of images is enabled via a first software application. For example, the number of the images may represent the number of images synthesized to obtain a composite image via the camera. For example, the setting for the number of the images may represent a setting for a quick shot function corresponding to the sixth setting menu 170 of FIG. 1. For example, the processor may identify the user input of the electronic device 100 corresponding to a candidate value from among the candidate values of the setting for the number of images, via the first software application. For example, the processor may provide information on the identified value from the first software application to the second software application. For example, the processor may identify that a setting of the camera corresponding to the identified value is enabled. Prior to the operation 560, the processor may execute the first software application in response to a user input. In case that the first software application is executed, the second software application may be executed. For example, the second software application may be executed within a background state of the electronic device 100.

For example, in the operation 560, in case that the setting for the number of the images is identified as enabled, the processor may perform operation 565. In the operation 560, in case that the setting for the number of images is identified as disabled, the processor may perform operation 570.

In the operation 565, the processor may identify the number of new images based on the identified shot environment and the value for setting. For example, according to the identified shot environment, the number of the images may be identified within a range. Identifying the number of the images may represent determining a composite number of images to be used to obtain a final composite image with respect to the state of the surrounding environment (or the shot environment). For example, the value for setting may include the value enabling the setting with respect to the number of the images. For example, the processor may identify the number of the new images based on the value for the setting representing that the setting for the number of the images is enabled. In other words, the processor may determine the number within the range as the number of the images (or the composite number) based on the identified shot environment, and may determine the number of the new images (or a new composite number) based on the value for the setting representing the enablement. Accordingly, a quick shot function of the camera may be set, and the processor may identify the minimum value as the number of images, from among the values within a range in which the number of images may be identified. For example, in case that the identified shot environment is in a state of low-illuminance, the number of images may be identified within a range of 20 to 30. At this time, in case that the quick shot function of the camera is set, the processor may identify the number of images as 20. This may be to obtain the composite image more quickly by reducing the number of images required for the composite image in case that the quick shot function of the camera is set.

In operation 570, the processor may identify the number of images with respect to the identified shot environment. For example, in case that the identified shot environment is in a state of low-illuminance, the number of images may be identified within the range of 20 to 30. In case that the quick shot function of the camera is disabled, i.e., the value for the setting is a value representing disablement, the processor may identify an arbitrary number within the range of 20 to 30 as the number of images. Herein, the arbitrary number may be determined according to the value of low-state illuminance.

For example, the number of the new images identified as the setting for the number of images is enabled may be less than or equal to the number of images identified as the setting is disabled. This is because the setting is for the quick shot function, and the number of images required for synthesizing for the quick shot needs to be minimum within the range (in the above example, 20 to 30) determined according to the illuminance.

In operation 575, the processor may obtain images based on the number of identified images. For example, the processor may obtain images with the number of images identified via the camera in response to the user input for a shot item displayed in the user interface of the second software application. The number of images identified herein may include the number of the new images identified in the operation 565 or the number of images identified in the operation 570. For example, the processor may obtain the number of images corresponding to the identified value in response to the user input for the shot item.

In operation 580, the processor may obtain the composite image by using the obtained images. For example, the processor may obtain the composite image by synthesizing the obtained images. Herein, the composite image may represent a final image obtained via the camera in response to the user input.

In FIG. 5B, a case where a plurality of images are used to obtain the final composite image is described as an example. However, the present disclosure is not limited thereto. According to an embodiment, in the operation 565, in case that the quick shot function of the camera is set, the processor may identify the number of images (or the composite number), required for synthesizing to obtain the final composite image, as 1. For example, the processor may output one image obtained via a configuration (e.g., an image signal processor (ISP) of the camera) that processes information on the image of the camera as the final composite image. That is, the processor may obtain the final image without synthesizing. Therefore, in this case, in the operation 575, the processor may obtain only one image, and in the operation 580, the processor may identify the one image as the final composite image.

In FIG. 5B, an example of an operation in which the electronic device 100 obtains an image via a camera as the setting for the quick shot function is adjusted is illustrated, but the present disclosure is not limited thereto. For example, referring to the second setting menu 130 of FIG. 1, as the setting for a soft image texture function is adjusted, the electronic device 100 may obtain an image in which a periphery of visual objects in the obtained image is displayed sharply or relatively blurry.

Referring to FIGS. 1 to 5B, by changing the setting of the camera via a separate software application (e.g., the first software application) for changing the setting of the camera, the previously used setting of the camera may be maintained even when the electronic device is changed or the user of the electronic device is changed. In addition, by changing the setting of the camera via a separate software application, the previous setting of the camera may be maintained even when it is only an update for taking a shot via the camera. In addition, by changing the setting of the camera via a separate software application, information for modification and supplementation may be provided in a process of updating the application for taking a shot via the camera. In addition, individual customization may be performed according to the user using the electronic device by changing the setting of the camera via a separate software application. For example, a user who uses the camera at a professional level may shoot via the camera with a changed setting via a separate software application. On the other hand, a typical user may use only a software application for taking a shot via the camera without changing the setting or changing the setting at a simple level via a separate software application. In addition, by changing the setting of the camera via a separate software application, optimizing the setting values that may vary as a model of the camera or configuration (e.g., lens) included in the camera changes is possible. Therefore, the electronic device may provide the user with an optimized setting value for each electronic device by using a software application for a setting of the camera.

FIG. 6 is a block diagram illustrating an electronic device 601 in a network environment 600 according to various embodiments.

Referring to FIG. 6, the electronic device 601 in the network environment 600 may communicate with an electronic device 602 via a first network 698 (e.g., a short-range wireless communication network), or at least one of an electronic device 604 or a server 608 via a second network 699 (e.g., a long-range wireless communication network). According to an embodiment, the electronic device 601 may communicate with the electronic device 604 via the server 608. According to an embodiment, the electronic device 601 may include a processor 620, memory 630, an input module 650, a sound output module 655, a display module 660, an audio module 670, a sensor module 676, an interface 677, a connecting terminal 678, a haptic module 679, a camera module 680, a power management module 688, a battery 689, a communication module 690, a subscriber identification module(SIM) 696, or an antenna module 697. In some embodiments, at least one of the components (e.g., the connecting terminal 678) may be omitted from the electronic device 601, or one or more other components may be added in the electronic device 601. In some embodiments, some of the components (e.g., the sensor module 676, the camera module 680, or the antenna module 697) may be implemented as a single component (e.g., the display module 660).

The processor 620 may execute, for example, software (e.g., a program 640) to control at least one other component (e.g., a hardware or software component) of the electronic device 601 coupled with the processor 620, and may perform various data processing or computation. According to an embodiment, as at least part of the data processing or computation, the processor 620 may store a command or data received from another component (e.g., the sensor module 676 or the communication module 690) in volatile memory 632, process the command or the data stored in the volatile memory 632, and store resulting data in non-volatile memory 634. According to an embodiment, the processor 620 may include a main processor 621 (e.g., a central processing unit (CPU) or an application processor (AP)), or an auxiliary processor 623 (e.g., a graphics processing unit (GPU), a neural processing unit (NPU), an image signal processor (ISP), a sensor hub processor, or a communication processor (CP)) that is operable independently from, or in conjunction with, the main processor 621. For example, when the electronic device 601 includes the main processor 621 and the auxiliary processor 623, the auxiliary processor 623 may be adapted to consume less power than the main processor 621, or to be specific to a specified function. The auxiliary processor 623 may be implemented as separate from, or as part of the main processor 621.

The auxiliary processor 623 may control at least some of functions or states related to at least one component (e.g., the display module 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). According to an embodiment, the auxiliary processor 623 (e.g., an image signal processor or a communication processor) may be implemented as part of another component (e.g., the camera module 680 or the communication module 690) functionally related to the auxiliary processor 623. According to an embodiment, the auxiliary processor 623 (e.g., the neural processing unit) may include a hardware structure specified for artificial intelligence model processing. An artificial intelligence model may be generated by machine learning. Such learning may be performed, e.g., by the electronic device 601 where the artificial intelligence is performed or via a separate server (e.g., the server 608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634.

The program 640 may be stored in the memory 630 as software, and may include, for example, an operating system (OS) 642, middleware 644, or an application 646.

The input module 650 may receive a command or data to be used by another component (e.g., the processor 620) of the electronic device 601, from the outside (e.g., a user) of the electronic device 601. The input module 650 may include, for example, a microphone, a mouse, a keyboard, a key (e.g., a button), or a digital pen (e.g., a stylus pen).

The sound output module 655 may output sound signals to the outside of the electronic device 601. The sound output module 655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 660 may visually provide information to the outside (e.g., a user) of the electronic device 601. The display module 660 may include, for example, a display, a hologram device, or a projector and control circuitry to control a corresponding one of the display, hologram device, and projector. According to an embodiment, the display module 660 may include a touch sensor adapted to detect a touch, or a pressure sensor adapted to measure the intensity of force incurred by the touch.

The audio module 670 may convert a sound into an electrical signal and vice versa. According to an embodiment, the audio module 670 may obtain the sound via the input module 650, or output the sound via the sound output module 655 or a headphone of an external electronic device (e.g., an electronic device 602) directly (e.g., wiredly) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. According to an embodiment, the sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device (e.g., the electronic device 602) directly (e.g., wiredly) or wirelessly. According to an embodiment, the interface 677 may include, for example, a high definition multimedia interface (HDMI), a universal serial bus (USB) interface, a secure digital (SD) card interface, or an audio interface.

A connecting terminal 678 may include a connector via which the electronic device 601 may be physically connected with the external electronic device (e.g., the electronic device 602). According to an embodiment, the connecting terminal 678 may include, for example, an HDMI connector, a USB connector, a SD card connector, or an audio connector (e.g., a headphone connector).

The haptic module 679 may convert an electrical signal into a mechanical stimulus (e.g., a vibration or a movement) or electrical stimulus which may be recognized by a user via his tactile sensation or kinesthetic sensation. According to an embodiment, the haptic module 679 may include, for example, a motor, a piezoelectric element, or an electric stimulator.

The camera module 680 may capture a still image or moving images. According to an embodiment, the camera module 680 may include one or more lenses, image sensors, image signal processors, or flashes.

The power management module 688 may manage power supplied to the electronic device 601. According to an embodiment, the power management module 688 may be implemented as at least part of, for example, a power management integrated circuit (PMIC).

The battery 689 may supply power to at least one component of the electronic device 601. According to an embodiment, the battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the application processor (AP)) and supports a direct (e.g., wired) communication or a wireless communication. According to an embodiment, the communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as Bluetooth^{™}, wireless-fidelity (Wi-Fi) direct, or infrared data association (IrDA)) or the second network 699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The wireless communication module 692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 692 may support a high-frequency band (e.g., the mmWave band) to achieve, e.g., a high data transmission rate. The wireless communication module 692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 692 may support various requirements specified in the electronic device 601, an external electronic device (e.g., the electronic device 604), or a network system (e.g., the second network 699). According to an embodiment, the wireless communication module 692 may support a peak data rate (e.g., 20Gbps or more) for implementing eMBB, loss coverage (e.g., 664dB or less) for implementing mMTC, or U-plane latency (e.g., 0.5ms or less for each of downlink (DL) and uplink (UL), or a round trip of 6ms or less) for implementing URLLC.

The antenna module 697 may transmit or receive a signal or power to or from the outside (e.g., the external electronic device) of the electronic device 601. According to an embodiment, the antenna module 697 may include an antenna including a radiating element composed of a conductive material or a conductive pattern formed in or on a substrate (e.g., a printed circuit board (PCB)). According to an embodiment, the antenna module 697 may include a plurality of antennas (e.g., array antennas). In such a case, at least one antenna appropriate for a communication scheme used in the communication network, such as the first network 698 or the second network 699, may be selected, for example, by the communication module 690 (e.g., the wireless communication module 692) from the plurality of antennas. The signal or the power may then be transmitted or received between the communication module 690 and the external electronic device via the selected at least one antenna. According to an embodiment, another component (e.g., a radio frequency integrated circuit (RFIC)) other than the radiating element may be additionally formed as part of the antenna module 697.

According to various embodiments, the antenna module 697 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 601 and the external electronic device 604 via the server 608 coupled with the second network 699. Each of the electronic devices 602 or 604 may be a device of a same type as, or a different type, from the electronic device 601. According to an embodiment, all or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 601. The electronic device 601 may provide the outcome, with or without further processing of the outcome, as at least part of a reply to the request. To that end, a cloud computing, distributed computing, mobile edge computing (MEC), or client-server computing technology may be used, for example. The electronic device 601 may provide ultra low-latency services using, e.g., distributed computing or mobile edge computing. In another embodiment, the external electronic device 604 may include an internet-of-things (IoT) device. The server 608 may be an intelligent server using machine learning and/or a neural network. According to an embodiment, the external electronic device 604 or the server 608 may be included in the second network 699. The electronic device 601 may be applied to intelligent services (e.g., smart home, smart city, smart car, or healthcare) based on 5G communication technology or IoT-related technology.

Fig. 7 is a block diagram illustrating the camera module according to various embodiments.

Referring to Fig. 7, the camera module 680 may include a lens assembly 710, a flash 720, an image sensor 730, an image stabilizer 740, memory 750 (e.g., buffer memory), or an image signal processor 760. The lens assembly 710 may collect light emitted or reflected from an object whose image is to be taken. The lens assembly 710 may include one or more lenses. According to an embodiment, the camera module 680 may include a plurality of lens assemblies 710. In such a case, the camera module 680 may form, for example, a dual camera, a 360-degree camera, or a spherical camera. Some of the plurality of lens assemblies 710 may have the same lens attribute (e.g., view angle, focal length, auto-focusing, f number, or optical zoom), or at least one lens assembly may have one or more lens attributes different from those of another lens assembly. The lens assembly 710 may include, for example, a wide-angle lens or a telephoto lens.

The flash 720 may emit light that is used to reinforce light reflected from an object. According to an embodiment, the flash 720 may include one or more light emitting diodes (LEDs) (e.g., a red-green-blue (RGB) LED, a white LED, an infrared (IR) LED, or an ultraviolet (UV) LED) or a xenon lamp. The image sensor 730 may obtain an image corresponding to an object by converting light emitted or reflected from the object and transmitted via the lens assembly 710 into an electrical signal. According to an embodiment, the image sensor 730 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 730 may be implemented using, for example, a charged coupled device (CCD) sensor or a complementary metal oxide semiconductor (CMOS) sensor.

The image stabilizer 740 may move the image sensor 730 or at least one lens included in the lens assembly 710 in a particular direction, or control an operational attribute (e.g., adjust the read-out timing) of the image sensor 730 in response to the movement of the camera module 680 or the electronic device 601 including the camera module 680. This allows compensating for at least part of a negative effect (e.g., image blurring) by the movement on an image being captured. According to an embodiment, the image stabilizer 740 may sense such a movement by the camera module 680 or the electronic device 601 using a gyro sensor (not shown) or an acceleration sensor (not shown) disposed inside or outside the camera module 680. According to an embodiment, the image stabilizer 740 may be implemented, for example, as an optical image stabilizer. The memory 750 may store, at least temporarily, at least part of an image obtained via the image sensor 730 for a subsequent image processing task. For example, if image capturing is delayed due to shutter lag or multiple images are quickly captured, a raw image obtained (e.g., a Bayer-patterned image, a high-resolution image) may be stored in the memory 750, and its corresponding copy image (e.g., a low-resolution image) may be previewed via the display module 660. Thereafter, if a specified condition is met (e.g., by a user's input or system command), at least part of the raw image stored in the memory 750 may be obtained and processed, for example, by the image signal processor 760. According to an embodiment, the memory 750 may be configured as at least part of the memory 630 or as a separate memory that is operated independently from the memory 630.

The image signal processor 760 may perform one or more image processing with respect to an image obtained via the image sensor 730 or an image stored in the memory 750. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 760 may perform control (e.g., exposure time control or read-out timing control) with respect to at least one (e.g., the image sensor 730) of the components included in the camera module 680. An image processed by the image signal processor 760 may be stored back in the memory 750 for further processing, or may be provided to an external component (e.g., the memory 630, the display module 660, the electronic device 602, the electronic device 604, or the server 608) outside the camera module 680. According to an embodiment, the image signal processor 760 may be configured as at least part of the processor 620, or as a separate processor that is operated independently from the processor 620. If the image signal processor 760 is configured as a separate processor from the processor 620, at least one image processed by the image signal processor 760 may be displayed, by the processor 620, via the display module 660 as it is or after being further processed.

According to an embodiment, the electronic device 601 may include a plurality of camera modules 680 having different attributes or functions. In such a case, at least one of the plurality of camera modules 680 may form, for example, a wide-angle camera and at least another of the plurality of camera modules680 may form a telephoto camera. Similarly, at least one of the plurality of camera modules 680 may form, for example, a front camera and at least another of the plurality of camera modules680 may form a rear camera.

As described above, an electronic device 100 may comprise a camera 380 or 680. The electronic device 100 may include a processor 620. The processor 620 may be configured to, in response to an execution of a first software application for setting of the camera 380 or 680, display a user interface of the first software application including setting menus respectively corresponding to settings related to a shot via the camera 380 or 680. The processor 620 may be configured to identify a user input received with respect to a setting menu from among the setting menus. The processor 620 may be configured to, based on the user input, identify a value for the setting corresponding to the setting menu. The processor 620 may be configured to, based on executing the second software application in a foreground state, obtain an image by using the camera 380 or 680 driven based on the setting adjusted according to the value.

According to an embodiment, the setting menu may provide a plurality of candidate values allocated based on a capability of the camera 380 or 680 related to the setting. The user input may be an input representing to select a candidate value from among the plurality of the candidate values as the value. The plurality of the candidate values may be provided from the second software application to the first software application.

According to an embodiment, the plurality of the candidate values may be provided from the second software application executed in a background state in response to executing the first software application to the first software application.

According to an embodiment, the processor 620 may be configured to, in response to the identification of the value, provide the value from the first software application to the second software application. The processor 620 may be configured to adjust the setting according to the value by using the second software application executed in the background state.

According to an embodiment, the value may be at least temporarily stored with respect to the second software application for the adjustment of the setting.

According to an embodiment, the setting menu may correspond to a setting identifying a number of second images used for obtaining a first image in response to a user input for a shot item displayed in a user interface of the second software application. The processor 620 may be configured to, in response to a touch input for the shot item in the user interface of the second software application, identify a state of an environment related to a shot via the camera 380 or 680 executed based on the touch input. The processor 620 may be configured to, based on the state, identify a range of the number of the second images executed based on the touch input. The processor 620 may be configured to, based on the value representing that the setting is enabled, obtain the first image by synthesizing the N second images obtained via the camera 380 or 680. The processor 620 may be configured to, based on the value representing that the setting is disabled, obtain the first image by synthesizing the M second images obtained via the camera 380 or 680. The N may be less than the M.

According to an embodiment, the setting menu may correspond to a setting adjusting a degree displaying a periphery of a visual object in a first image obtained in response to a user input for a shot item displayed in a user interface of the second software application. The processor 620 may be configured to, based on the value representing that the setting adjusting the degree displaying the periphery of the visual object is enabled, obtain the first image including the visual object in which the periphery is displayed sharply. The processor 620 may be configured to, based on the value representing that the setting adjusting the degree displaying the periphery of the visual object is disabled, obtain the first image including the visual object in which the periphery is displayed blurry.

According to an embodiment, the setting menu may be configured to correspond to a setting automatically changing a lens of the camera 380 or 680 for performing a shot via the camera 380 or 680 by using the second software application. The processor 620 may be configured to, based on the value enabling the setting automatically changing the lens of the camera 380 or 680, change the lens of the camera 380 or 680 regardless of a user input of the electronic device 100 in accordance with a state of an environment related to a shot via the camera 380 or 680. The processor 620 may be configured to, based on the value representing that the setting automatically changing the lens of the camera 380 or 680 is disabled, change the lens of the camera 380 or 680 based on the user input.

According to an embodiment, the setting menu may correspond to a setting changing a shot mode of the camera 380 or 680 according to a time when a user input for a shot item displayed in a user interface of the second software application is inputted. The processor 620 may be configured to, based on the value enabling the setting changing the shot mode of the camera 380 or 680, change the shot mode of the camera 380 or 680 from an image mode to a record mode in case that the time when the user input is inputted is greater than or equal to a first time.

According to an embodiment, the setting menu may correspond to a setting identifying a number of first images obtained in response to a user input for a shot item displayed in a user interface of the second software application. The processor 620 may be configured to, in case that the value corresponding to the setting identifying the number of the first images is a first value, obtain a first set of the first images corresponding to the first value. The processor 620 may be configured to, in case that the value corresponding to the setting identifying the number of the first images is a second value, obtain a second set of the first images corresponding to the second value.

According to an embodiment, the setting menu may correspond to a setting identifying termination of the second software application. The processor 620 may be configured to, in case that the value corresponding to the setting identifying the termination is a first value and that identifying that a user input during a first time corresponding to the first value is not inputted, perform terminating the second software application. The processor 620 may be configured to, in case that the value corresponding to the setting identifying the termination is a second value and that identifying that a user input during a second time corresponding to the second value is not inputted, perform terminating the second software application.

According to an embodiment, the setting menu may correspond to a setting displaying, via a display of an external electronic device 100, a preview for a first image obtainable via the camera 380 or 680 by using the second software application. The processor 620 may be configured to, based on the value enabling the setting displaying the preview via the display of the external electronic device 100, transmit information for displaying the preview for the first image to the external electronic device 100. The processor 620 may be configured to, based on the value disabling the setting displaying the preview via the display of the external electronic device 100, transmit information for displaying a user interface of the second software application to the external electronic device 100.

As described above, a method performed by an electronic device 100 may comprise, in response to an execution of a first software application for setting of a camera 380 or 680 of the electronic device 100, displaying 410 a user interface of the first software application including setting menus respectively corresponding to settings related to a shot via the camera 380 or 680. The method may comprise identifying 415 a user input received with respect to a setting menu from among the setting menus. The method may comprise, based on the user input, identifying 420 a value for the setting corresponding to the setting menu. The method may comprise, based on executing a second software application in a foreground state, obtaining an image by using the camera 380 or 680 driven based on the setting adjusted according to the value.

According to an embodiment, the setting menu may provide a plurality of candidate values allocated based on a capability of the camera 380 or 680 related to the setting. The user input may be an input representing to select a candidate value from among the plurality of the candidate values as the value. The plurality of the candidate values may be provided from the second software application to the first software application.

According to an embodiment, the plurality of candidate values may be provided from the second software application executed in a background state in response to executing the first software application to the first software application.

According to an embodiment, the method may comprise, in response to the identification of the value, providing the value from the first software application to the second software application. The method may comprise adjusting the setting according to the value by using the second software application executed in the background state.

According to an embodiment, the value may be at least temporarily stored with respect to the second software application for the adjustment of the setting.

According to an embodiment, the setting menu may correspond to a setting identifying a number of second images used for obtaining a first image in response to a user input for a shot item displayed in a user interface of the second software application. The method may comprise, in response to a touch input for the shot item in the user interface of the second software application, identifying a state of an environment related to a shot via the camera 380 or 680 executed based on the touch input. The method may comprise, based on the state, identifying a range of the number of the second images executed based on the touch input. The method may comprise, based on the value representing that the setting is enabled, obtaining the first image by synthesizing the N second images obtained via the camera 380 or 680. The method may comprise, based on the value representing that the setting is disabled, obtaining the first image by synthesizing the M second images obtained via the camera 380 or 680. The N may be less than the M.

According to an embodiment, the setting menu may correspond to a setting adjusting a degree displaying a periphery of a visual object in a first image obtained in response to a user input for a shot item displayed in a user interface of the second software application. The method may comprise, based on the value representing that the setting adjusting the degree displaying the periphery of the visual object is enabled, obtaining the first image including the visual object in which the periphery is displayed sharply. The method may comprise, based on the value representing that the setting adjusting the degree displaying the periphery of the visual object is disabled, obtaining the first image including the visual object in which the periphery is displayed blurry.

According to an embodiment, the setting menu may correspond to a setting automatically changing a lens of the camera 380 or 680 for performing a shot via the camera 380 or 680 by using the second software application. The method may comprise, based on the value enabling the setting automatically changing the lens of the camera 380 or 680, changing the lens of the camera 380 or 680 regardless of a user input of the electronic device 100 in accordance with a state of an environment related to a shot via the camera 380 or 680. The method may comprise, based on the value representing that the setting automatically changing the lens of the camera 380 or 680 is disabled, changing the lens of the camera 380 or 680 based on the user input.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 640) including one or more instructions that are stored in a storage medium (e.g., internal memory 636 or external memory 638) that is readable by a machine (e.g., the electronic device 601). For example, a processor (e.g., the processor 620) of the machine (e.g., the electronic device 601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100) comprising:
a camera (380, 680); and
a processor (620),
wherein the processor (620) is configured to:
in response to an execution of a first software application for setting of the camera (380, 680), display a user interface of the first software application including setting menus respectively corresponding to settings related to a shot via the camera (380, 680),
identify a user input received with respect to a setting menu from among the setting menus,
based on the user input, identify a value for the setting corresponding to the setting menu,
based on executing a second software application in a foreground state, obtain an image by using the camera (380, 680) driven based on the setting adjusted according to the value.

2. The electronic device (100) of claim 1,
wherein the setting menu provides a plurality of candidate values allocated based on a capability of the camera (380, 680) related to the setting,
wherein the user input is an input representing to select a candidate value from among the plurality of the candidate values as the value,
wherein the plurality of the candidate values are provided from the second software application to the first software application.

3. The electronic device (100) of claim 2,
wherein the plurality of the candidate values are provided from the second software application executed in a background state in response to executing the first software application to the first software application.

4. The electronic device (100) of claim 3,
wherein the processor (620) is configured to:
in response to the identification of the value, provide the value from the first software application to the second software application, and
adjust the setting according to the value by using the second software application executed in the background state.

5. The electronic device (100) of claim 4,
wherein the value is at least temporarily stored with respect to the second software application for the adjustment of the setting.

6. The electronic device (100) of claim 1,
wherein the setting menu corresponds to a setting identifying a number of second images used for obtaining a first image in response to a user input for a shot item displayed in a user interface of the second software application,
wherein the processor (620) is configured to:
in response to a touch input for the shot item in the user interface of the second software application, identify a state of an environment related to a shot via the camera (380, 680) executed based on the touch input,
based on the state, identify a range of the number of second images executed based on the touch input,
based on the value representing to enable the setting, obtain the first image by synthesizing the N second images obtained via the camera (380, 680),
based on the value representing to disable the setting, obtain the first image by synthesizing the M second images obtained via the camera (380, 680), and
wherein the N is less than the M.

7. The electronic device (100) of claim 1,
wherein the setting menu corresponds to a setting adjusting a degree displaying a periphery of a visual object in a first image obtained in response to a user input for a shot item displayed in a user interface of the second software application,
wherein the processor (620) is configured to:
based on the value representing to enable the setting adjusting the degree displaying the periphery of the visual object, obtain the first image including the visual object in which the periphery is displayed sharply, and
based on the value representing to disable the setting adjusting the degree displaying the periphery of the visual object, obtain the first image including the visual object in which the periphery is displayed blurry.

8. The electronic device (100) of claim 1,
wherein the setting menu corresponds to a setting automatically changing a lens of the camera (380, 680) for performing a shot via the camera (380, 680) by using the second software application,
wherein the processor (620) is configured to:
based on the value enabling the setting automatically changing the lens of the camera (380, 680), change the lens of the camera (380, 680) regardless of a user input of the electronic device (100) in accordance with a state of an environment related to a shot via the camera (380, 680), and
based on the value representing to disable the setting automatically changing the lens of the camera (380, 680), change the lens of the camera (380, 680) based on the user input.

9. The electronic device (100) of claim 1,
wherein the setting menu corresponds to a setting changing a shot mode of the camera (380, 680) according to a time when a user input for a shot item displayed in a user interface of the second software application is inputted,
wherein the processor (620) is configured to:
based on the value enabling the setting changing the shot mode of the camera (380, 680), change the shot mode of the camera (380, 680) from an image mode to a record mode in case that the time when the user input is inputted is greater than or equal to a first time.

10. The electronic device (100) of claim 1,
wherein the setting menu corresponds to a setting identifying a number of first images obtained in response to a user input for a shot item displayed in a user interface of the second software application,
wherein the processor (620) is configured to:
in case that the value corresponding to the setting identifying the number of first images is a first value, obtain a first set of the first images corresponding to the first value, and
in case that the value corresponding to the setting identifying the number of first images is a second value, obtain a second set of the first images corresponding to the second value.

11. The electronic device (100) of claim 1,
wherein the setting menu corresponds to a setting identifying termination of the second software application,
wherein the processor (620) is configured to:
in case that the value corresponding to the setting identifying the termination is a first value and that identifying that a user input during a first time corresponding to the first value is not inputted, perform terminating the second software application, and
in case that the value corresponding to the setting identifying the termination is a second value and that identifying that a user input during a second time corresponding to the second value is not inputted, perform terminating the second software application.

12. The electronic device (100) of claim 1,
wherein the setting menu corresponds to a setting displaying, via a display of an external electronic device (100), a preview for a first image obtainable via the camera (380, 680) by using the second software application,
wherein the processor (620) is configured to:
based on the value enabling the setting displaying the preview via the display of the external electronic device (100), transmit, to the external electronic device (100), information for displaying the preview for the first image, and
based on the value disabling the setting displaying the preview via the display of the external electronic device (100), transmit, to the external electronic device (100), information for displaying a user interface of the second software application.

13. A method performed by an electronic device (100) comprising:
in response to an execution of a first software application for setting of the camera (380, 680) of the electronic device (100), displaying (410) a user interface of the first software application including setting menus respectively corresponding to settings related to a shot via the camera (380, 680),
identifying (415) a user input received with respect to a setting menu from among the setting menus,
based on the user input, identifying (420) a value for the setting corresponding to the setting menu,
based on executing a second software application in a foreground state, obtaining an image by using the camera (380, 680) driven based on the setting adjusted according to the value.

14. The method of claim 13,
wherein the setting menu provides a plurality of candidate values allocated based on a capability of the camera (380, 680) related to the setting,
wherein the user input is an input representing to select a candidate value from among the plurality of the candidate values as the value,
wherein the plurality of the candidate values are provided from the second software application to the first software application.

15. A non-transitory computer readable storage medium, when executed by a processor (620) of an electronic device (100) including a camera (380, 680), storing one or more programs including instructions that cause to:
in response to an execution of a first software application for setting of the camera (380, 680), display a user interface of the first software application including setting menus respectively corresponding to settings related to a shot via the camera (380, 680),
identify a user input received with respect to a setting menu from among the setting menus,
based on the user input, identify a value for the setting corresponding to the setting menu,
based on executing a second software application in a foreground state, obtain an image by using the camera (380, 680) driven based on the setting adjusted according to the value.
